# EUROPÄISCHE PATENTSCHRIFT

(11) **EP 2 250 469 B1**
(45) Veröffentlichungstag und Bekanntmachung des Hinweises auf die Patenterteilung: **27.02.2019**
(21) Anmeldenummer: 08872998.3
(22) Anmeldetag: 21.11.2008
(51) Int. Cl.: G01D 11/30

(54) **SENSORGEHÄUSE MIT BEFESTIGUNGSMITTEL**
SENSOR HOUSING HAVING MOUNTING MEANS
BOÎTIER DE CAPTEUR À MOYEN DE FIXATION

(30) Priorität: 28.02.2008 DE 102008011676
(43) Veröffentlichungstag der Anmeldung: 17.11.2010
(73) Patentinhaber: Robert Bosch GmbH, 70442 Stuttgart (DE)
(72) Erfinder: OHL, Christian, 72793 Pfullingen (DE); NACHTRAB, Timo, 72076 Tübingen (DE)
(86) Internationale Anmeldenummer: PCT/EP2008/066019
(87) Internationale Veröffentlichungsnummer: WO 2009/106167

(56) Entgegenhaltungen:
- EP-A- 1 376 067
- EP-A- 1 480 306
- WO-A-2007/144260
- DE-A1- 19 715 556

## Beschreibung

### Stand der Technik

Die Erfindung betrifft ein Sensorgehäuse mit einem integrierten Befestigungsmittel.

Für die Montage von peripheren Sensoren, z.B. Druck- oder Beschleunigungssensoren im Fahrzeug werden häufig Schraubverbindungen eingesetzt. Zur Befestigung ist in das Kunststoffgehäuse des Sensors meist eine Metallbuchse integriert. Im Fahrzeugblech sind als Befestigungselemente Schweiß- oder Nietmuttern oder Gewindebolzen enthalten.

Die Druckschrift EP 1 376 067 A zeigt einen Sensor mit Gehäuse und Mittel zur Fixierung des Gehäuses in einer Nut eines Bauteils.

Die Druckschrift EP 1 480 306 A zeigt eine Befestigungshülse zur Befestigung eines Sensorgehäuses an einem Karosserieteil eines Fahrzeugs.

Die Druckschrift WO 2007/144260 A zeigt ein Sensorgehäuse mit einer ersten Befestigungsmöglichkeit mittels Schrauböse und einer zweiten Befestigungsmöglichkeit mittels einer Rastverbindung.

Die Druckschrift DE 197 15 556 A1 zeigt eine Anordnung eines Thermoschalters an der Wand eines Wärmetauschers in einem Kraftfahrzeug.

### Offenbarung der Erfindung

Aufgabe der Erfindung ist ein Sensorgehäuse, das ohne zusätzliches Befestigungselement direkt im Fahrzeug montiert werden kann. Aufgabe der Erfindung ist auch, für ein solches Sensorgehäuse einen Ersatz für den Reparaturfall zu schaffen

### Vorteile der Erfindung

Die Erfindung betrifft ein Sensorgehäuse mit einem integrierten Befestigungsmittel, wobei das Befestigungsmittel einen Buchsenbereich, einen Verformungsbereich und einen Krafteinleitungsbereich aufweist, wobei der Verformungsbereich durch Einleitung einer mechanischen Kraft in den Krafteinleitungsbereich verformbar ist, wobei das Sensorgehäuse an einem Montageort in Form einer Aussparung montierbar ist, indem der Verformungsbereich eine Hinterschneidung an der Aussparung bildet.

Kern der Erfindung ist ein Sensor, der so aufgebaut ist, daß der Sensor über einen Nietvorgang direkt in eine Aussparung in der Fahrzeugstruktur (Blech, Kunststoff oder Verbundwerkstoff) montiert werden kann, ohne daß ein zusätzliches Befestigungselement im Fahrzeug erforderlich ist.

Ein Befestigungselement (Niet- / Schweißmutter, Bolzen oder ähnliches) am Fahrzeug ist nicht erforderlich und kann entfallen. Dadurch entfallen Material- und Montagekosten. Eine Schraube bzw. Mutter zur Befestigung des Sensors entfällt. Sensor und Befestigungselement bilden eine Einheit und können in einem einzigen Montageprozeß befestigt werden. Über eine geeignete Ausformung des Sensors kann eine bestimmte Montagerichtung vorgegeben werden. Die insbesondere für Beschleunigungssensoren problematische Fehlorientierung um 180° in der Befestigungsachse beim Einbau ist ausgeschlossen. Ein zusätzlicher Kodierpin oder ähnliches kann dadurch entfallen. Die im Stand der Technik verwendete lösbare Schraubverbindung entfällt als Fehlerursache für die Zuverlässigkeit der Befestigung.
Eine vorteilhafte Ausgestaltung des erfindungsgemäßen Sensorgehäuses sieht vor, daß das Sensorgehäuse (1) mit dem integrierten Befestigungsmittel (6) im Buchsenbereich (6d) fest verbunden ist. Vorteilhaft ist auch, daß der Krafteinleitungsbereich (6a) ein Innengewinde aufweist. Dadurch läßt sich leicht eine Krafteinleitung durch Einschrauben einer Schraube bewerkstelligen. Besonders vorteilhaft ist dabei, daß im Buchsenbereich (6d) eine Schraube oder ein Gewindebolzen angeordnet und in den Krafteinleitungsbereich (6a) eingeschraubt ist. Vorteilhaft läßt man die Schraube nach der Krafteinleitung eingeschraubt, wodurch eine zusätzliche kraftschlüssige Verbindung geschaffen ist und der Arbeitsschritt des Herausschraubens entfällt.
Eine vorteilhafte Ausgestaltung des erfindungsgemäßen Sensorgehäuses sieht vor, daß das Sensorgehäuse mit einer Sollbruchstelle am Befestigungsmittel versehen ist, wobei die Sollbruchstelle zwischen Buchsenbereich und Verformungsbereich, insbesondere zwischen einem Kragen und dem Verformungsbereich, angeordnet ist. Vorteilhaft ist dabei, daß der Sensor für einen Austausch, beispielsweise in einem Reparaturfall, einfach entfernt werden und ein anderer Sensor eingesetzt werden kann. Der Sensor kann demontiert und ein Ersatzsensor über eine einfache Schraubverbindung angebracht werden. Dazu wäre vorteilhaft auch schon die benötigte Schraube vorhanden wie in der vorigen vorteilhaften Ausgestaltung beschrieben.

### Zeichnung

Figur 1 zeigt ein montiertes Sensorgehäuse und ein Befestigungsmittel für die Montage in einem Fahrzeug im Stand der Technik.
Figur 2 zeigt ein erfindungsgemäßes Sensorgehäuse mit integriertem Befestigungsmittel.

### Ausführungsbeispiel

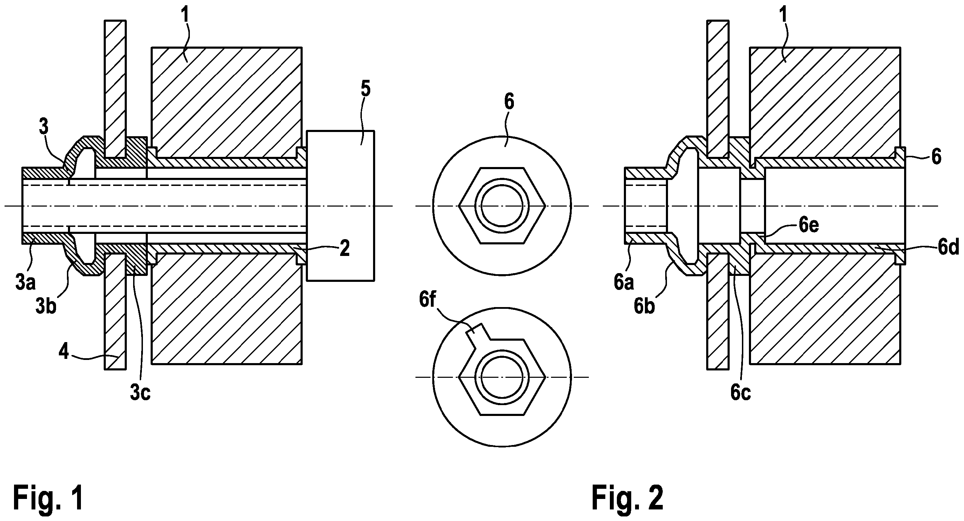

Figur 1 zeigt ein montiertes Sensorgehäuse und ein Befestigungsmittel für die Montage in einem Fahrzeug im Stand der Technik. Stand der Technik ist ein Sensorgehäuse 1 mit einer Buchse 2. In einer Fahrzeugstruktur ist an einem Montageort eine Schweißmutter oder eine Nietmutter 3 befestigt. Die Nietmutter hat eine Gewindezone 3a, eine Verformungszone 3b und einen Kragen 3c. Zur Montage wird die Nietmutter durch Zug über einen in die Gewindezone eingeschraubten Gewindebolzen verformt. In einem weiteren Montagevorgang wird der Sensor mit einer Schraube 5 am Befestigungselement 3 befestigt.
Figur 2 zeigt ein erfindungsgemäßes Sensorgehäuse mit integriertem Befestigungsmittel. Dargestellt ist ein Sensorgehäuse 1 mit integriertem Befestigungsmittel 6 mit einem Krafteinleitungsbereich in Form einer Gewindezone 6a, einem Verformungsbereich 6b, einem Kragen 6c und einem Buchsenbereich 6d. Das Befestigungselement ist über den Buchsenbereich fest mit dem Gehäuse des Sensors verbunden, z.B. durch Umspritzen wenn das Gehäuse aus einer Spritzgußmasse gebildet ist. Zur Montage des Sensorgehäuses werden Gewinde- und Verformungszone des Befestigungsmittels in eine Aussparung im Fahrzeugblech, den Montageort, eingeführt. Durch Zug über einen Gewindebolzen wird der Verformungsbereich deformiert und bildet eine formschlüssige Verbindung mit dem Fahrzeugblech, indem hinter der Ausnehmung im Blech eine Hinterschneidung durch den Verformungsbereich ausgebildet wird, und vor der Ausnehmung das Sensorgehäuse selbst oder der Kragen angeordnet ist. Der Gewindebolzen kann nach dem Montagevorgang entfernt werden. Alternativ kann eine im Sensorgehäuse vormontierte Schraube zur Verformung eingesetzt werden und auch im Sensorgehäuse verbleiben.

Das Befestigungsmittel weist im Buchsenbereich und im Bereich des Kragens eine Sollbruchstelle z.B. in Form einer Einschnürung 6e auf. Zum Austausch des Sensors kann z.B. durch Aufbohren Material an der Stelle der Einschnürung entfernt und so der Sensor mit dem Buchsenbereich vom Kragenteil des Befestigungsmittels gelöst werden. Der Kragen 6c sowie der Verformungsbereich 6b und der Krafteinleitungsbereich 6a (hier die Gewindezone) des Befestigungselements 6 verbleiben in der Fahrzeugstruktur an der Ausnehmung 7. Dadurch ist eine einfache Montage eines Ersatzsensorgehäuses 1, z.B. mit Durchgangsbuchse 2 wie im Stand der Technik, mit einer Schraube 5 möglich.

Weiterhin kann das Befestigungselement 6 ein "Poka Yoke" über eine mechanische Kodierung 6f z.B. eine asymmetrische Formgebung enthalten, die über eine entsprechende Form der Aussparung 7 in der Fahrzeugstruktur (z.B. Stanzgeometrie im Fahrzeugblech) am Montageort eine bestimmte Orientierungsrichtung des Sensorgehäuses für die Montage im Fahrzeug vorgibt. Dadurch wird eine korrekte Ausrichtung des Sensorgehäuses erzielt, zusätzliche Geometrien zur Richtungskodierung, beispielsweise durch einen Kodierpin, können entfallen. Die Montage des Sensors ist aufgrund der zusätzlichen Geometrien nur möglich, wenn der Sensor in der richtigen räumlichen Orientierung angesetzt wird.
In einer weiteren Ausführungsform können der Krafteinleitungsbereich und der Verformungsbereich auch ineinander übergehen, d.h. zwei nicht klar getrennte Bereiche sein, oder auch einen einzigen Bereich bilden.

## Patentansprüche

1. Sensorgehäuse (1) mit einem integrierten Befestigungsmittel (6),
- wobei das Befestigungsmittel (6) einen Buchsenbereich (6d), einen Verformungsbereich (6b) und einen Krafteinleitungsbereich (6a) aufweist,
- wobei der Verformungsbereich (6b) durch Einleitung einer mechanischen Kraft in den Krafteinleitungsbereich (6a) verformbar ist,
- wobei das Sensorgehäuse an einem Montageort in Form einer Aussparung (7) montierbar ist, indem der Verformungsbereich (6b) eine Hinterschneidung an der Aussparung (7) bildet,
**dadurch gekennzeichnet, dass** das Befestigungsmittel (6), eine Sollbruchstelle (6e) aufweist, wobei die Sollbruchstelle (6e) zwischen Buchsenbereich (6d) und Verformungsbereich (6b) angeordnet ist.

2. Sensorgehäuse nach Anspruch 1, **dadurch gekennzeichnet, dass** das Sensorgehäuse (1) mit dem integrierten Befestigungsmittel (6) im Buchsenbereich (6d) fest verbunden ist.

3. Sensorgehäuse nach Anspruch 1, **dadurch gekennzeichnet, dass** der Krafteinleitungsbereich (6a) ein Innengewinde aufweist.

4. Sensorgehäuse nach Anspruch 3, **dadurch gekennzeichnet, dass** im Buchsenbereich (6d) eine Schraube oder ein Gewindebolzen angeordnet und in den Krafteinleitungsbereich (6a) eingeschraubt ist.

## Claims

1. Sensor housing (1) having an integrated fastening means (6),
- wherein the fastening means (6) has a bush region (6d), a deformation region (6b) and a force introduction region (6a),
- wherein the deformation region (6b) can be deformed by introducing a mechanical force into the force introduction region (6a),
- wherein the sensor housing can be mounted at a mounting location in the form of a clearance (7) in that the deformation region (6b) forms an undercut on the clearance (7),
**characterized in that** the fastening means (6) has a predetermined breaking point (6e), wherein the predetermining breaking point (6e) is arranged between bush region (6d) and deformation region (6b) .

2. Sensor housing according to Claim 1, **characterized in that** the sensor housing (1) having the integrated fastening means (6) is fixedly connected in the bush region (6d).

3. Sensor housing according to Claim 1, **characterized in that** the force introduction region (6a) has an internal thread.

4. Sensor housing according to Claim 3, **characterized in that** a screw or a threaded bolt is arranged in the bush region (6d) and is screwed into the force introduction region (6a).

## Revendications

1. Boîtier du capteur (1) comportant un moyen de fixation intégré (6),
- dans lequel le moyen de fixation (6) présente une zone de douille (6d), une zone de déformation (6b) et une zone d'application de force (6a),
- dans lequel la zone de déformation (6b) peut être déformée par application d'une force mécanique dans la zone d'application de force (6a),
- dans lequel le boîtier de capteur peut être monté à un emplacement de montage ayant la forme d'un évidement (7), la zone de déformation (6b) formant une contre-dépouille sur l'évidement (7),
**caractérisé en ce que** le moyen de fixation (6) présente un point de rupture prédéterminé (6e), dans lequel le point de rupture prédéterminé (6e) est disposé entre la zone de douille (6d) et la zone de déformation (6b).

2. Boîtier de capteur selon la revendication 1, **caractérisé en ce que** le boîtier de capteur (1) est relié de manière fixe dans la zone de douille (6d) au moyen de fixation intégré (6).

3. Boîtier de capteur selon la revendication 1, **caractérisé en ce que** la zone d'application de force (6a) présente un filetage intérieur.

4. Boîtier de capteur selon la revendication 3, **caractérisé en ce qu'**une vis ou un boulon fileté est disposé dans la zone de douille (6d) et vissé dans la zone d'application de force (6a).
